# EUROPEAN PATENT APPLICATION

(11) **EP 1 499 075 A1**
(43) Date of publication of application: **19.01.2005**
(21) Application number: 04016456.8
(22) Date of filing: 13.07.2004
(51) Int. Cl.: H04L 12/56

(54) **Route update protocol for a wireless sensor network**

(30) Priority: 14.07.2003 US 486415 P; 01.04.2004 KR 2004022582
(71) Applicant: Samsung Electronics Co., Ltd., Suwon-si, Gyeonggi-do (KR); CITY UNIVERSITY OF NEW YORK (CUNY), New York, NY 10031 (US)
(72) Inventor: Park, Jon-hun 802-1404, Byukjeokgol, Yeongtong-gu Suwon-si Gyeonggi-do (KR); Lee, Myung-jong Dpt. of Electronics Engineering of, University of New York New York 10031 (US); Hu, Xu-hui Dpt. of Electronics Engineering of, University of New York New York 10031 (US)
(74) Representative: Grünecker, Kinkeldey, Stockmair & Schwanhäusser Anwaltssozietät

(57) **Abstract**

An apparatus and method thereof for route update for a communication system including a target, a sensor node collecting information of the target within a predetermined range, and a sink node receiving the information of the target from the sensor node through a first route built therebetween for target information transmission. The sensor node collects the information of the target, and broadcasts a routing request message when the information of the target is not received anymore. The information contained in the routing request message received from a first sensor node of a first sensor node on the first route is compared with the information contained in the routing request message received from a second sensor node of a second sensor node group at a predetermined distance from the first sensor node group. The first route is updated by using the sensor node selected based on the comparison.

## Description

### CROSS-REFERENCE TO RELATED APPLICATIONS

This application claims the benefit of U.S. Provisional Patent Application No. 60/486,415 filed July 14, 2003 in the U.S. Patent and Trademark Office, and Korean Patent Application No. 2004-22582-filed in the Korean Intellectual Property Office on April 1, 2004, the disclosure of which are incorporated herein by reference.

### BACKGROUND OF THE INVENTION

### Field of the Invention

The present invention relates to a routing between a sensor node and a sink node in a sensor network, and more particularly, to an apparatus and method thereof for routing an appropriate path from the sensor node to the sink node, and from the sink node to the sensor node.

### Description of the Related Art

In a general mobile communication system, a mobile element and a base station may directly send and receive data without passing by other mobile elements/nodes. Meanwhile, in a sensor network, one sensor node uses other sensor nodes to transmit its data to a sink node.

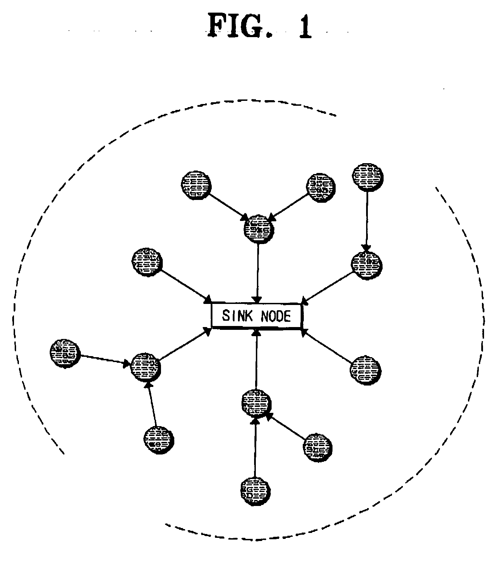

The structure of a sensor network will be briefly described with reference to FIG. 1.

Referring to FIG. 1, a general sensor network comprises a sink node and a plurality of sensor nodes. Although FIG. 1 depicts one sink node only, one of ordinary skill in the art will appreciate that the sensor network can comprise at least two sink nodes, depending on a user's selection.

The sensor node collects information about a target which is set by the user. Such information about the target, for example, may include ambient temperature and movement of an object.

The sensor node transmits collected information to the sink node. The sink node receives data from the sensor nodes of the sensor network. The sensor nodes within a predetermined distance to the sink node can transmit data directly. However, the sensor nodes outside the predetermined distance of the sink node transmit information indirectly via the sensor nodes adjacent to the sink node. This is to reduce power consumption. The power consumption for the transmission of data between the sensor node and the sink node is proportional to the distance therebetween. Accordingly, for power saving purposes, the sensor nodes outside a predetermined distance from the sink node indirectly transmit information via the plurality of sensor nodes, i.e., via relay nodes adjacent to the sink node. Of course, a relay node may transmit its own collected data to the sink node, directly or indirectly.

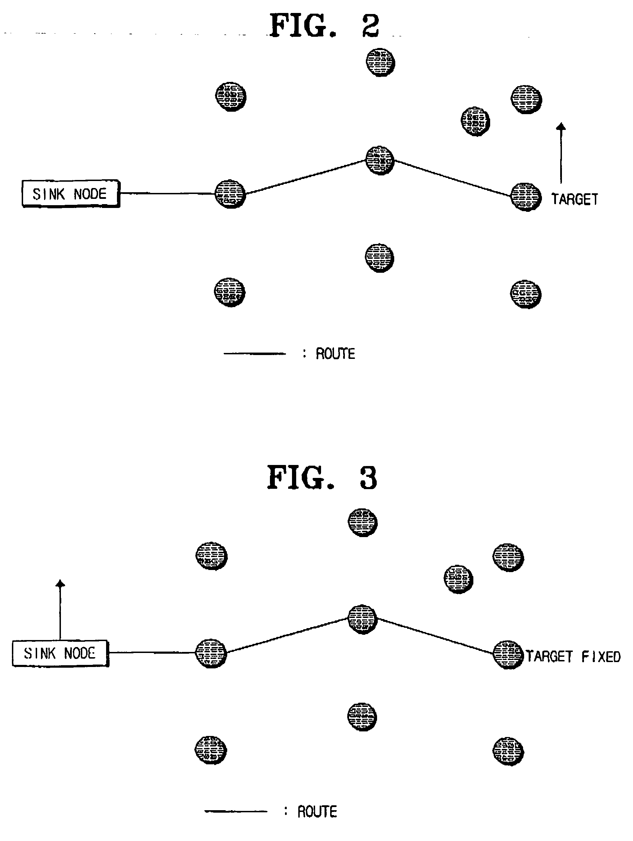

As described above, a sensor node collects information about the target and transmits its collected information to the sink node. However, the target and the sink nodes are usually not stationary, but mobile. FIG. 2 shows one example where information about a stationary target is transmitted to a mobile sink node; for example, when a temperature of a certain area is transmitted to a running car. In this case, the driver of the car receives temperature information about certain area in a real-time basis. FIG. 3 shows another example where the information about a mobile target is transmitted to the stationary sink node.

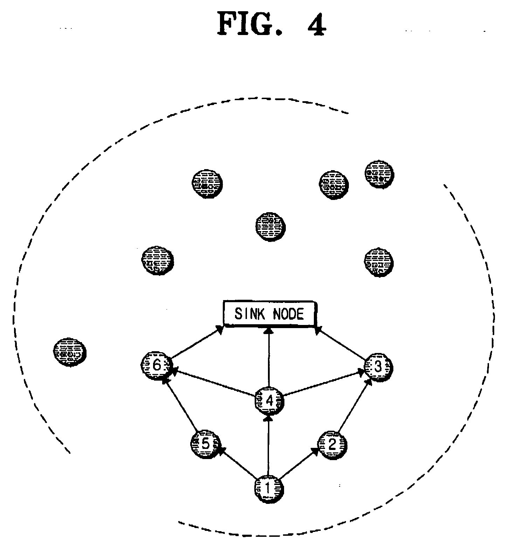

FIG. 4 shows one general related art sensor network, in which one sensor node ('sensor node 1') finds an optimum route to the sink node. This sensor network is described in.greater detail below.

The sensor node 1 generates a routing request RREQ, which contains an address of the sensor node 1, i.e. , a source address, and an address of the sink node, i.e., a destination address. The sensor node 1 broadcasts RREQ to its neighboring sensor nodes. In FIG. 4, the sensor nodes 2, 4 and 5 receive the RREQ. The sensor nodes in receipt of the RREQ compare their own addresses with the received destination address. If the addresses do not match, the sensor nodes update RREQ and broadcast it to their neighboring nodes. The updated RREQ now contains hop count information. The sensor nodes receiving the RREQ each generate a routing table based on the RREQ. The routing table usually includes a source address, a destination address, a hop count and an address of the sensor node broadcasting the RREQ.

The RREQ, broadcast by the sensor node 1, is transmitted to the sink node via a plurality of paths. The sink node in receipt of the RREQ sets a route by using the hop count information contained in the RREQ. That is, the sink node sets the route which has the least hop count. Then the sink node transmits a routing reply RREP to the sensor node 4. The sensor node 4 transmits the RREP to the sensor node 1, by using the routing table stored therein. As this process repeats, a route is built between the sensor node 1 and the sink node. The sensor node 1 transmits its collected information to the sink node through such a setup route.

As mentioned above with reference to FIGs. 2 and 3, due to mobility of the target and the sink node, a route once built cannot always be appropriate. Accordingly, a new route may be found using the existing route. The re-establishing of a route is shown in FIG. 4. If the sensor nodes include a GPS (Global Positioning System) feature, the sensor nodes can build a route more rapidly by transmitting and receiving information on their locations with one another. However, it is uneconomical to include GPS in the sensor nodes. Hereinbelow, a method of re-establishing a route using an existing route will be described.

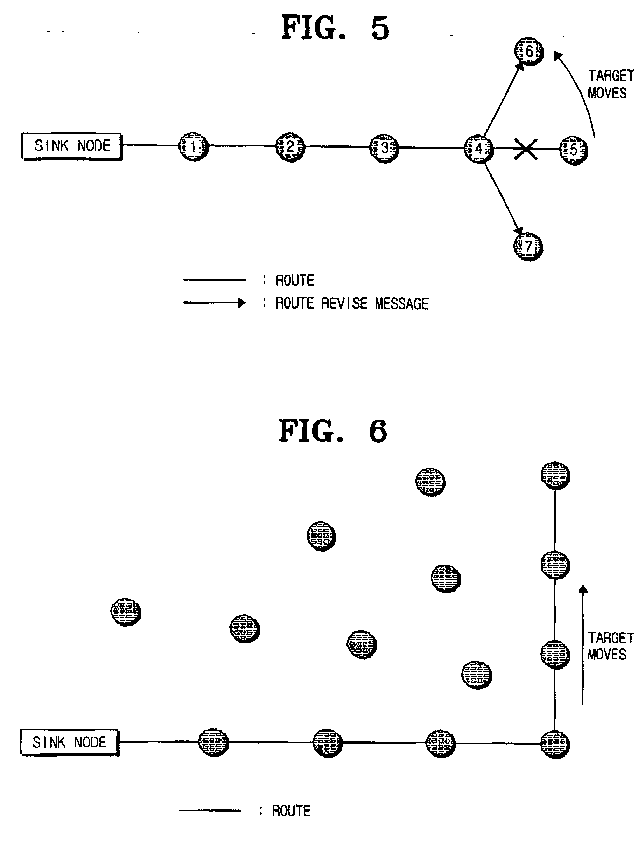

When the target moves, the sensor nodes collecting information about the target change, and therefore, the sensor nodes stop the operation and the route becomes stale. As an example, referring to FIG. 5, the sensor node 5 initially transmits information about the target to the sink node using a certain route. However, as the target moves, the sensor node 5 is unable to receive the data necessary to determine information about the target. In FIG. 5, once the target has moved to an area which is accessible by the sensor node 6, then sensor node 6 collects information about the target.

The sensor node 4, which can not receive the information of the target, broadcasts a routing recovery message to the neighboring area. Accordingly, the sensor node 6 in receipt of the routing recovery message recognizes that the sensor node 4 is requesting re-establishment of a route. The routing recovery message contains information about the intended target. However, a problem occurs if the target moves frequently as shown in FIG. 6. FIG. 6 shows a route of long length, which may be caused due to a heavy dependency on the previous route. If the route is extended, power consumption at each of the sensor nodes of the route increases.

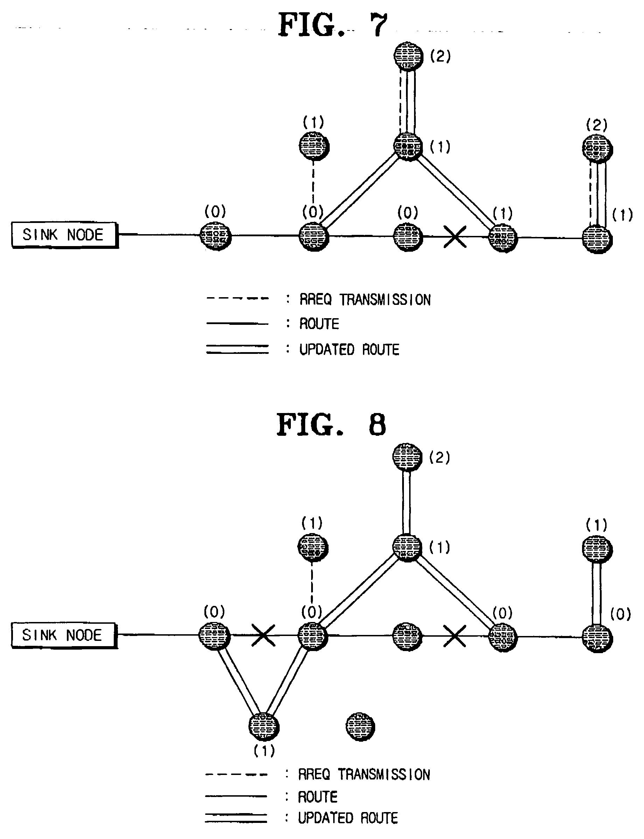

FIG. 7 illustrates a related art way of re-establishing a route which was broken due to the movement of relay nodes. Referring to FIG. 7, re-establishing a route using a counter will be described below.

In order to use the previous route to build a new route, a proper threshold is used. A sensor node, intending to update a route to the sink node, broadcasts RREQ to the neighboring sensor nodes. If the sensor node is not in the previous route, a count value is increased by 1. A sensor node in receipt of the RREQ compares the count value with the threshold. If the count value is equal to, or smaller than the threshold, the sensor node updates the received RREQ and broadcasts the updated RREQ to the neighboring sensor nodes.

The count value is cumulative. Accordingly, when the RREQ passes two sensor nodes which are not in the previous route, the count value becomes 2. If the threshold is set to '1', the sensor node having a count value 2 disposes the received RREQ. Accordingly, the number of broadcast RREQs can be reduced. By performing the above processes, the sensor node 5 re-establishes a route to the sink node using sensor node 4, sensor node 7, sensor node 2 and sensor node 1. However, if the route is broken at the at least two sensor nodes on the previous route, a route cannot be re-established by using the previous route.

FIG. 8 illustrates the process of re-establishing a route which was broken by the movement of relay nodes.

Referring to FIG. 8, when a sensor node on a previous route receives a RREQ, the sensor node resets the count value. Accordingly, the problem as mentioned with reference to FIG. 7 can be resolved to some extent. However, power consumption varies along the sensor nodes of the sensor network because of dependency on the previous route. Therefore, a method which can solve the problems as mentioned above, is desired.

### SUMMARY OF THE INVENTION

The present invention has been developed in order to solve the above drawbacks and other problems associated with the related art arrangement. An aspect of the present invention is to provide an apparatus and a method thereof for building a new route between a sink node and a sensor node by using an existing route.

It is another aspect of the present invention to provide an apparatus and a method thereof, which is capable of minimizing power consumption differences along the sensor nodes of a sensor network.

It is yet another aspect of the present invention to provide an apparatus and a method thereof, which is capable of reducing power consumption of the sensor nodes of a sensor network by reducing the number of messages transmitted between the nodes for route establishment.

The above objects and other aspects of the present invention can be achieved by providing, in a communication system which comprises a sensor node for collecting information of a target within a predetermined range, and a sink node receiving the information of the target from the sensor node through a first route built therebetween for target information transmission. A method of route update updating the first route from the sensor nodes to the sink node comprises: a sensor node collecting the information of the target, and broadcasting a routing request message when the information of the target is not received anymore; comparing an information contained in the routing request message received from a first sensor node of a first sensor node group on the first route, with an information contained in the routing request message received from a second sensor node of a second sensor node group at a predetermined distance from the first sensor node group; and updating the first route by using the sensor node selected based on the comparison.

According to one embodiment of the present invention, in a communication system comprising a sensor node collecting information of a target within a predetermined range, and a sink node receiving the information of the target via a certain route, a routing apparatus of the communication system updates a path between the sensor node and the sink node for target information transmission and comprises the sensor node collecting the information of the target which broadcasts a routing request message, when the information of the target is not received from the certain route; a first sensor node of a first sensor node group being positioned on the certain route; and a second sensor node of a second sensor node group within a predetermined distance from the first sensor node group, the second sensor node comparing an information contained in the routing request message from the first sensor node with an information contained in the routing request message from the second sensor node.

### BRIEF DESCRIPTION OF THE DRAWINGS

The above aspects and features of the present invention will be more apparent by describing certain embodiments of the present invention with reference to the accompanying drawings, in which:

FIG. 1 illustrates the structure of a related art sensor network;

FIG. 2 illustrates a target moving in a related art sensor network;

FIG. 3 illustrates a sink node moving in a related art sensor network;

FIG. 4 illustrates a route established in a related art sensor network;

FIG. 5 illustrates a route re-established in a related art sensor network in accordance with the moving target;

FIG. 6 illustrates a problem occurring in a related art sensor network when the route re-establishment is performed for a moving target;

FIG. 7 illustrates a problem occurring in a related art sensor network when the route re-establishment is performed for a moving target;

FIG. 8 illustrates a problem occurring in a related art sensor network when the route re-establishment is performed for a moving target;

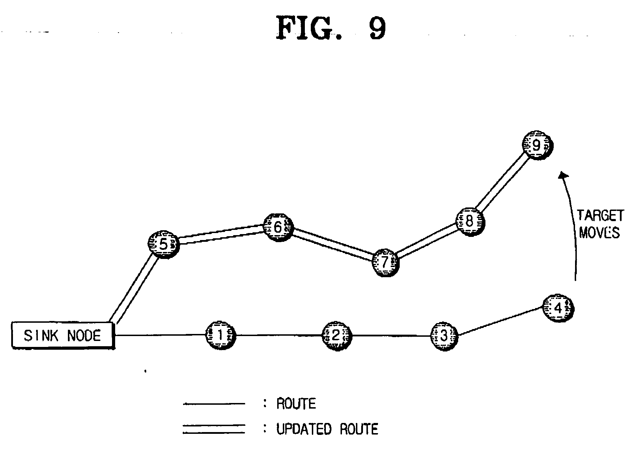

FIG. 9 illustrates a route which is re-established in accordance with a moving target, according to an embodiment of the present invention;

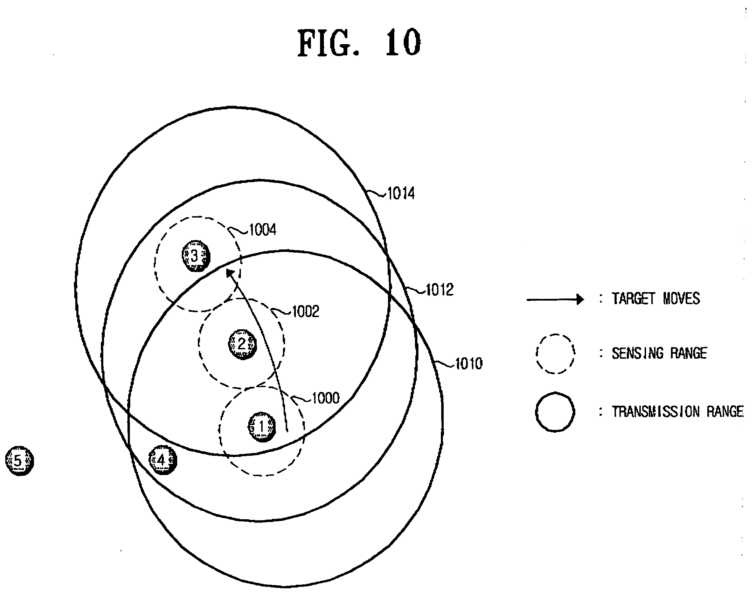

FIG. 10 illustrates sensing and transmission ranges of a sensor node according to an embodiment of the present invention;

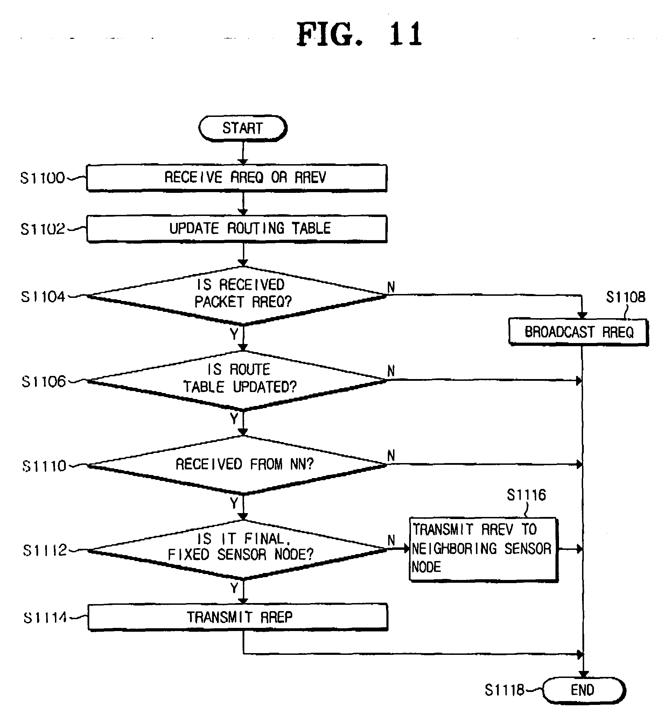

FIG. 11 illustrates the operations of the sensor node on the existing route according to an embodiment of the present invention; and

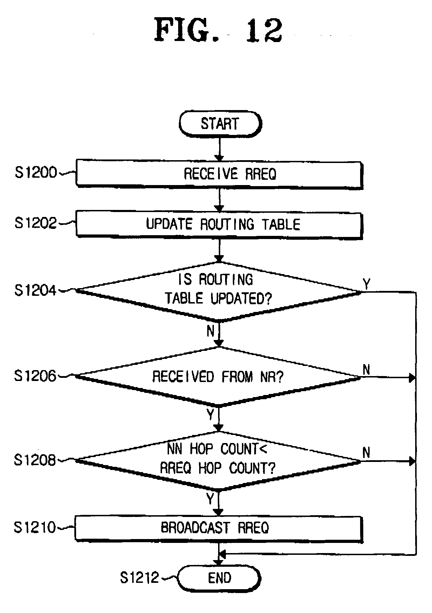

FIG. 12 illustrates the operations of the sensor node at a predetermined distance from the sensor node which is on the existing route according to an embodiment of the present invention.

### DETAILED DESCRIPTION OF THE EXEMPLARY EMBODIMENTS OF THE INVENTION

Certain embodiments of the present invention will be described in greater detail with reference to the accompanying drawings.

In the following description, like drawing reference numerals are used for the same elements even in different drawings. The matters defined in the description such as a detailed construction and elements are provided to assist in a comprehensive understanding of the invention. Thus, it is apparent that the present invention can be carried out without those defined matters. Also, well-known functions or constructions are not described in detail since they would unnecessarily obscure understanding of the invention.

FIG. 9 shows one exemplary embodiment where a route is re-established according to the present invention. Briefly put, the present invention proposes an efficient way of re-routing using an existing route. The present invention further proposes an efficient way of re-routing by using only the sensor nodes within a predetermined range with respect to a sensor node on the existing route. According to the embodiment of the present invention as shown in FIG. 9, when a sensor node collecting information of the target changes due to movement of the target, the route is updated. The new route uses the nodes within one hop from the old route. By this route updating method, the number of nodes required for the re-routing can be reduced, and a reduced number of messages are used. Although the present embodiment depicts the example where the route update is performed according to the movement of the target, one will appreciate that update may also be performed when the sink node moves, or when both the sink node and the target move.

The present invention will now be described in greater detail, with reference to two main stages of the route update process. First, the first stage of route update will be described:

### - The first stage -

Route update according to one embodiment of the present invention will be described mainly with reference to FIG. 10 which illustrates re-routing according to one embodiment of the present invention.

FIG. 10 shows the sensor nodes which collect information of a moving target and transmit the collected information to the sink node. The sensor node detects the target only when the target stays inside the sensing range. The sensor node 1 has a sensing range 1000, and the sensor node 2 has a sensing range 1002. The sensor node 3 has a sensing range 1004. Although FIG. 10 shows an individual sensing range for each sensor node, one of ordinary skill in the art will appreciate that the present invention is also applicable to a case where the sensing ranges of the sensor nodes overlap. It is assumed that the target, which was inside the sensing range 1000, passes the sensing range 1002, and moves to the sensing range 1004. Using the old route when it was within the sensing range 1000, the sensor node 1 transmits information of the target to the sensor node 4. The sensor node 1 can transmit its data through a transmission area 1010. Because the sensor node 4 is within the transmission range 1010, it can receive the data from the sensor node 1. The sensor node 4 then transmits received data to the sensor node 5 through a preset route.

If the target moves from the sensing range 1000 to the sensing range 1002, due to the movement of the target, the sensor node 1 can not sense the target anymore. Accordingly, the sensor node 1 broadcasts information about the target and information about the sensor node 4 at predetermined time intervals. Due to the movement of the target, the sensor node 2 can now sense the target. The sensor node 2 also recognizes by the information broadcast from the sensor node 1 that it should transmit information about the target to the sensor node 4. The sensor node 4 deletes information about the sensor node 1 and the information about the hop count from the routing table. The sensor node 2, sensing the target, transmits a response to the sensor node 1. The sensor node 1 in receipt of the response stops the broadcasting of information about the target and the information about the sensor node 4.

The sensor node 2 transmits a routing request message to the sensor node 4. Because the transmission range of the sensor node 2 is 1012, the sensor node 4 receives the routing request message from the sensor node 2. Using the routing request message as received, the sensor node 4 updates its routing table. The sensor node 4 transmits a routing response message to the sensor node 2. Using the received routing response message, the sensor node 2 generates a routing table regarding a new sensor node 2, thereby building a route to the sensor node 4. The sensor node 2 collects information about the target, and transmits the collecting information to the sensor node 4 using the set route.

If the target is moved from the sensing range 1002 to the sensing range 1004, the sensor node 2 operates in the same way as the sensor node 1. The sensor node 3 transmits a routing request message to the sensor node 4. Because the transmission range of the sensor node 3 is 1014, the sensor node 4 can not receive the routing request message from the sensor node 3. Accordingly, the sensor node 4 enters into the second stage of the route update which will be described below.

### -The second stage-

The second stage of the route update will be described in greater detail below with reference to FIG. 9 and one certain embodiment of the present invention.

The sensor node 4 transmits information about the target to the sink node, using a set route. The target moves from the sensing range of the sensor node 4 to the sensing range of the sensor node 9. The sensor node 4 can not collect information of the target anymore, and therefore, operates in the same way as in the first stage described above. Meanwhile, the sensor node 3 is without the transmission range of the sensor node 9. Accordingly, the sensor node 9 can not receive a routing response message from the sensor node 3. Having not received the routing response message, the sensor node 9 broadcasts a routing request message. The routing request message is received at the sensor node 8 and the sensor node 4, respectively. The sensor node 8 and the sensor node 4, in receipt of the routing request message, update their routing tables, respectively. The updated routing table includes a hop count for the received routing request message. The hop count is, for example, set to '1'.

If a routing request message is not received for a predetermined time, the sensor node 3 broadcasts a routing request message including an infinite hop count. The sensor node 4, the sensor node 8, the sensor node 2 and the sensor node 7 receive the routing request message, respectively. The sensor node 2 infinitely updates the hop count of the routing table. The sensor node 7 stores the routing table which includes the infinite hop count. The sensor node 8 compares the hop count contained in the received routing request message with the hop count of the routing table. If the comparison results indicate that the hop count of the routing table is smaller than the hop count of the routing request message, the sensor node 8 generates a routing request message. The sensor node 8 broadcasts the generated routing request message to the neighboring sensor nodes. If the comparison result indicates that the hop count of the routing table is larger than the hop count of the routing request message, the sensor node 8 stops broadcasting. FIG. 9 shows one example where the hop count of the routing table is set to '1', and the hop count of the routing request message being infinite.

The sensor node 7, in receipt of the routing request message broadcast from the sensor node 8, updates its routing table. Using the received routing request message, the sensor node 3 updates its routing table. The sensor node 3 transmits a routing revise RREV message to the sensor node 2. The RREV message contains a hop count. The sensor node 2 performs the operations by the sensor node 3, and the sensor node 7 performs the operation by the sensor node 8. The sensor node 1 performs the operation by the sensor node 3, and the sensor node 6 performs the operation by the sensor node 8. The sensor node 5, in receipt of the routing request message from the sensor node 6, updates its routing table and transmits a routing request message to the sink node. The sensor node 1 transmits RREV message to the sink node. The sink node receives a routing request message and RREV message from the sensor node 5 and the sensor node 1, respectively, and compares the received messages, selects the one having less hop count and transmits a routing response message accordingly. If the hop counts are determined to be equal, the sink node selects a new route. FIG. 9 shows one example where the sink node transmits a routing response message through a new route, i.e. , to the sensor node 5, when the hop counts are determined to be equal. By the above processes, a new route is built between the sink node and the sensor node 9.

Instead of using a route which connects the old route and the sensor node 9, data is transmitted through a new route which has the same hop counts. As a result, a new route can be efficiently established when the target moves. Additionally, because sensor nodes within 1 hop area participate in the update of route, the number of messages transmitted among the nodes can be reduced. If necessary, sensor nodes at a 2-hop distance or within a certain number of hops can participate in the re-routing.

FIG. 11 shows the operation of a certain sensor node which is positioned on an old route. This sensor node on the old route will hereinbelow called "NR", and the sensor nodes within 1-hop distance from the old route will be called "NN" for the convenience of explanation.

In operation S1100, NR receives PREQ or RREV. In operation S 1102, NR updates its routing table, using the received RREQ or RREV. In operation S1104, NR determines whether the received message is RREQ or not. If so, the operation S 1106 is performed, and if not, the operation S 1108 is performed. The NR in the operation S 1108 generates a RREQ and broadcasts the generated RREQ. In operation S 1106, NR determines whether its routing table is updated. If so, the operation S1110 is performed, and if not, the operation S 1118 is performed.

In operation S1110, NR determines whether RREQ is received from NN or not. If so, the operation S1112 is performed, and if not, the operation S1118 is performed. In operation S1112, NR determines whether the sensor node is a fixed destination sensor node, i. e. , determines whether it is the sink node or not. If so, the operation S1114 is performed, and if not, the operation S1116 is performed. In operation S 1114, NR generates a RREP, and transmits the generated RREP. In operation S 1116, NR transmits RREV to the neighboring NR.

FIG. 12 shows the operation at NN. In operation S1200, NN receives RREQ. In operation S1202, NN updates its routing table by using received RREQ. In operation S1204, NN determines whether its routing table is updated. If so, the operation S1206 is performed, and if not, the operation S1212 is performed.

In operation S1206, NN determines whether RREQ is received from NR or not. If so, the operation S1208 is performed, and if not, the operation S1212 is performed. In operation S1208, NN compares the hop count of its routing table with that of the received RREQ. If a comparison result indicates that the hop count of received RREQ is larger, the operation S1210 is performed, and if not, the operation S1212 is performed. In operation S1210, NN generates a RREQ by using its routing table, and broadcasts the generated RREQ.

FIG. 12 does not illustrate RREP. The NN transmits the received RREP to the neighboring sensor node by using its routing table. That is, NN transmits a message either to a neighboring NN or a neighboring NR according to the comparison of hop counts.

Although FIG. 9 depicts one example where the target moves, one of ordinary skill in the art will appreciate that the present invention is also applicable to a case where the sink node moves.

As described above in a the exemplary embodiments of the present invention, a new route is established by using sensor nodes within a predetermined distance from the old route, and therefore, the number of transmitted messages can be reduced. Additionally, by efficiently updating a route in accordance with the movement of the target, a power consumption of the sensor nodes of the sensor network can be reduced.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A route update method for a communication system which comprises a sensor node for collecting information of a target within a predetermined range, and a sink node receiving the information of the target from the sensor node through a first route built therebetween for target information transmission, the route update method updating the first route from the sensor nodes to the sink node, comprising:
collecting the information of the target via the sensor node, and broadcasting a routing request message when the information of the target is not received;
comparing information contained in the routing request message received from a first sensor node of a first sensor node group on the first route, with information contained in the routing request message received from a second sensor node of a second sensor node group at a predetermined distance from the first sensor node group; and
updating the first route by using the sensor node selected based on the comparison.

2. The route update method of claim 1, wherein the information contained in the routing request message is a hop count.

3. The route update method of claim 2, wherein the second sensor node is at one-hop, or a predetermined number of hops away from the first sensor node group.

4. The route update method of claim 3, wherein the second sensor node compares the hop count of the routing request message received at another sensor node of the second sensor group, with the hop count of the routing request message received from the first sensor node.

5. The route update method of claim 4, wherein, when the hop count of the routing request message is smaller, broadcasting an updated routing request message from the sensor node of the second sensor node group.

6. The route update method of claim 5, further comprising:
the first sensor node in receipt of the updated routing request message, transmitting a routing revise message to a neighboring sensor node of the first sensor node group to request an update of the route; and
the neighboring sensor node in receipt of the routing revise message, broadcasting a routing request message.

7. The route update method of claim 6, wherein the routing revise message includes a hop count.

8. The route update method of claim 1, wherein a need for route update arises when a sensing node sensing the target changes due to at least one of movement of the target, movement of the sink node, and movement of both the sensing node and the sink node.

9. A routing apparatus of a communication system, the routing appartus comprising:
a plurality of sensor nodes for collecting information of a target within a predetermined range;
a sink node receiving the information of the target via a certain route, the routing apparatus for routing a path between at least one of the sensor nodes and the sink node for target information transmission, wherein the sensor nodes collect the information of the target and broadcast a routing request message, when the information of the target is not received from the certain route, and wherein
a first sensor node of a first sensor node group of the plurality of sensor nodes being positioned on the certain route; and
a second sensor node of a second sensor node group of the plurality of sensor nodes within a predetermined distance from the first sensor node group, the second sensor node comparing an information contained in the routing request message from the first sensor node with an information contained in the routing request message from the second sensor node.

10. The routing apparatus of claim 9, wherein the information contained in the routing request message is a hop count.

11. The routing apparatus of claim 10, wherein the second sensor node is at one-hop, or a predetermined number of hops away from the first sensor node group.

12. The routing apparatus of claim 9, wherein the second sensor node compares a hop count of the routing request message received at another sensor node of the second sensor node group with a hop count of the routing request message received from the first sensor node.

13. The routing apparatus of claim 12, wherein the second sensor node broadcasts an updated routing request message, when the hop count of the routing request message received at the sensor node of the second sensor node group is smaller.

14. The routing apparatus of claim 13, wherein the first sensor node transmits a routing revise message including the hop count to request change of a route.

15. The routing apparatus of claim 14, wherein the first sensor node broadcasts an updated routing request message when receiving the routing revise message.
